# EUROPEAN PATENT SPECIFICATION

(11) **EP 2 248 083 B1**
(45) Date of publication and mention of the grant of the patent: **19.10.2016**
(21) Application number: 09777072.1
(22) Date of filing: 09.07.2009
(51) Int. Cl.: G06F 21/43, G06Q 20/10, G06Q 20/18, G06Q 20/32, G06Q 20/34, G06Q 20/38, G06Q 20/40, G07F 7/10, H04W 12/06

(54) **METHOD FOR AUTHENTICATION**
VERFAHREN ZUR AUTHENTIFIKATION
PROCÉDÉ D'AUTHENTIFICATION

(30) Priority: 29.07.2008 DE 102008035391
(43) Date of publication of application: 10.11.2010
(73) Proprietor: Deutsche Telekom AG, 53113 Bonn (DE)
(72) Inventor: KRÄMLING, Andreas, 53227 Bonn (DE); KOMPART, Andreas, 53757 Sankt Augustin (DE); BAUSE, Thomas, 30453 Hannover (DE)
(74) Representative: Cohausz Hannig Borkowski Wißgott
(86) International application number: PCT/EP2009/004986
(87) International publication number: WO 2010/012362

(56) References cited:
- WO-A-01/48714
- DE-A1- 10 229 901
- US-A1- 2002 029 342
- US-A1- 2002 099 662

## Description

The invention relates to a method for authentication of a user to an acceptance point, the authentication being performed by comparing a transaction number with a computed or stored transaction number.

Authentication methods of this kind are known and are used, for example, in online banking when using indexed transaction numbers. Here, the index, i.e. a first transaction number, is notified to the user who responds with the TAN, i.e. with the transaction authentication number representing the second transaction number or transaction ID. In this process, the transaction data are not linked together, and the TAN, i.e. the transaction authentication number, serves to sign the transaction, which is then triggered by this confirmation.

A disadvantage of the known methods is that they require prior registration of the user at the acceptance point, i.e. the user must be known to the acceptance point, with the result that a method of this kind cannot be performed anonymously. Furthermore, the corresponding TAN lists must be made available to the user in advance, which involves, in particular, the risk of misuse if the TAN list gets into the wrong hands.

International patent application WO01/48714 discloses a payment transaction method wherein a transaction center compares a transaction identification received from a point of sale and a transaction identification received from a customer mobile device before requesting payment.

The object of the invention is to provide a method for authentication of a user to an acceptance point that offers increased security of authentication and enables, in particular, the authentication of an anonymous user, i.e. a user who has not been previously registered with the acceptance point.

In accordance with the invention, this object is achieved by the authentication method set forth in claim 1. Advantageous developments of the invention are given in the dependent claims.

Especially advantageous in the method according to the invention for authentication of a user to an acceptance point, the authentication being performed by comparing a transaction number with a computed or stored transaction number, is that the acceptance point and/or a user terminal sends a request message to a central point and the central point provides and transmits a temporarily valid transaction number by means of which authentication to the acceptance point can be performed, or that the acceptance point provides a temporarily valid transaction number by means of which authentication to a central point can be performed, an authorization after successful authentication to the central point being performed by the generation and transmission of an authorization message from the central point to the acceptance point.

These developments of the invention thus make it possible for an anonymous user to authenticate himself to an acceptance point, such as a vending machine or automatic cashier machine, or to an Internet server offering programs or files for download, the successful authentication then triggering a transaction or similar, in particular triggering or confirming a payment transaction.

Appropriate applications can be provided for this purpose on a terminal of the user and/or an appropriate application can be provided on a cash desk/checkout, a PC or similar serving as a vending machine or automatic cashier machine, etc.

In this respect, the term "anonymous user" means that the user does not require to be previously registered with or known to the acceptance point since the authentication procedure is performed by invoking a central point.

A central point, i.e. a central application can be provided which is responsible for controlling the triggering of the transaction and, in particular, a payment transaction and which brings the two anonymous parties together, that is to say that in handling the authentication of the user to the acceptance point in accordance with the invention, it is possible to trigger a transaction by invoking a central point without the user having to first register with the acceptance point.

The acceptance point can be any vending machine or automatic cashier machine or also an offering on the Internet. The authentication can then serve, for example, to check whether the user complies with any specified age limit for using the offerings and/or to trigger or confirm a payment transaction, or similar.

The security of the authentication process is assured in particular by the fact that permanently valid transaction numbers do not have to be provided, output and stored in advance but that in each case a temporarily valid transaction number is provided and transmitted by means of which an authentication can be performed. In a first variant, the authentication is performed directly to the acceptance point through provision and transmission of the temporarily valid transaction number by the central point.

Personal identification (password, ultimately also a single-use TAN) can additionally be requested from the user. The request for this personal identification can take place in every case or in a rule-based manner depending on the current situation (e.g. detection of misuse, transaction amount, number of transactions per time interval).

In the other variant of the method according to the invention, the temporarily valid transaction number is provided by the acceptance point so as to allow authentication to the central point, whereafter, following successful authentication to the central point, this central point then generates an authorization message and transmits this to the acceptance point.

This ensures a very high level of security of the authentication process.

Preferably, the request for provision and/or transmission of the transaction number is sent by the acceptance point to the central point and/or by a user terminal to the acceptance point and/or to the central point, in particular by a mobile telephone terminal having an appropriate authentication application.

Preferably, the authentication process is triggered by a user through a personal code, in particular a password, a single-use transaction number (TrxID) or biometric identification, in particular a fingerprint or similar.

Preferably, the indication of a personal code for triggering the authentication process is required in every case or, alternatively, is requested depending on the current situation, in particular depending on the total turnover of the user within a time interval, the magnitude of the sum involved, the history of the customer, the type of the article and/or other customer-specific characteristics.

An increased level of security can be achieved in this way without it being apparent to the customer that the security level of the authentication process is variable and, in particular, can depend on predefinable parameters.

Preferably, the communication between the user terminal, acceptance point and central point takes place via mobile telephone connections and/or telephone connections or temporary or permanent communication connections, in particular via the Internet, and/or via short-range communication.

Communication between user terminal, acceptance point and central point can thus take place via various alternative or cumulative communication channels, depending on which option and network coverage is available as well as on the required level of security. In particular, the communication between user terminal, acceptance point and central point can take place in an encrypted manner, that is to say, with the transmitted data and/or data packets, transaction data and transaction number being transmitted in an encrypted manner.

Likewise, different services can be used, such as SMS (mobile telephony) and/or data link (mobile telephony). The communication can also take place via landline, DSL or similar, as well as by utilizing a combination of different services and technologies.

In a preferred embodiment, the request for provision and/or transmission of the transaction number is made by the acceptance point to the central point and/or by a user terminal to the acceptance point and/or by a user terminal to the central point. In particular, the user terminal can be a mobile telephone terminal having an appropriate authentication application.

There are therefore various possibilities which may be used alternatively or cumulatively for performing and implementing the method according to the invention. The different alternatives allow the creation of a wide variety of applications, in particular when transmission routes such as mobile telephone or Internet connections or similar are temporarily or permanently not available. With cumulative application of the different variants, it is possible to establish higher security levels, in particular in the form of multiple or nested or verified authentications.

In a preferred embodiment of the method according to the invention, the transaction number is requested by means of a mobile telephone terminal by means of a first short message and/or USSD, the transaction number being transmitted by the central point by means of a second short message and/or USSD to the mobile telephone terminal.

Through the use of mobile telephone connections and short messages (SMS, Short Message Service) a very high level of security is ensured while at the same time allowing rapid performance of the authentication method, since the central point can send an immediate response to the first request short message. In this respect, the mobile telephone terminal transmits a unique user code, for example in the form of the Mobile Subscriber Integrated Services Digital Network Number (MSISDN), i.e. the subscriber number at which a mobile telephone subscriber can be reached and by means of which a user can be clearly identified, it being possible in an appropriate database of the central point to assign to this user code a user account, for example, or age verification or similar.

Unstructured Supplementary Service Data (USSD) is a transmission service for GSM networks and supports mobile telephone supplementary services.

Preferably, the transaction number is transmitted by the central point via a mobile telephone connection to a mobile telephone terminal or via a telephone connection to a landline telephone. A transmission of this kind to a mobile telephone terminal or a landline telephone can, for example, be done in the form of a short message (SMS), as described above. Alternatively, or cumulatively, it is also possible for the transaction number to be transmitted by ,< a voice service in the form of a voice message that is automatically announced, or in the form of an e-mail or similar.

Alternatively or cumulatively, the transaction number can also be transmitted in the form of a graphics file within a multimedia message (MMS, Multimedia Messaging Service) sent to the mobile telephone terminal. By representing the transaction number as part of a transmitted graphic, the security level of the method according to the invention is increased still further since it is more difficult for an unauthorized third party spy out the transaction number from the graphic than to tap in to a voice message or to listen in, even if only inadvertently.

In a preferred embodiment of the method according to the invention, the transaction number is computed by means of an algorithm. In particular in this respect, a code word and/or a subscriber identification number, in particular MSISDN, IMSI or TIMSI, can form the basis for the computation and/or a code transmitted by short-range communication can form the basis for the computation. The MSISDN is the mobile telephone number, i.e. the Mobile Subscriber Integrated Services Digital Network Number (MSISDN), which is the dialable subscriber number that the caller uses to reach a mobile telephone subscriber. IMSI is the International Mobile Subscriber Identity, and TIMSI is, accordingly, a Temporary International Mobile Subscriber Identity. Clear identification of identity is thus possible by means of the MSISDN, IMSI or TIMSI.

It is especially advantageous in this respect that the security level of the method according to the invention can be increased still further by the having the algorithm run as a hidden process and computing the transaction number immediately upon a request for a transaction number, i.e. making it unnecessary to save and keep a repository of transaction numbers, which could possibly be spyable.

In a further embodiment of the method according to the invention, the transaction number is computed by means of an algorithm both by the acceptance point and by the central point using fixed parameters. In particular in this respect, the date and/or the time of the transaction number requests and/or parameters of a payment transaction, in particular an order number and/or article number and/or an article price and/or a code of the acceptance point and/or the number of active transactions can be used as parameters and thus constitute the basis for computation of the transaction number by means of the algorithm.

In this way, by using an appropriate application, the transaction numbers are computed using an algorithm both at the acceptance point and at the central point, with the algorithm running as a hidden process so that there is no need to store a repository of transaction numbers, which increases the security level still further.

Authentication of the user can then be performed either by the acceptance point issuing the computed transaction number, allowing the user to authenticate himself to the central point, or by the central point providing the computed transaction number to the user who can then use this transaction number to authenticate himself to the acceptance point.

In a preferred embodiment of the method according to the invention, authentication is performed using a transaction number tuple consisting of at least two transaction numbers A and B, the first transaction number A being provided by the acceptance point and the second transaction number B being provided by the central point based on the first transaction number A.

Preferably, a list of unused transaction numbers and/or transaction number tuples is stored temporarily or permanently in an interrogatable manner by the acceptance point.

This makes it possible to include in the method according to the invention even those acceptance points which cannot be connected online to a central point via a telephone and/or Internet connection and/or a mobile telephone connection, by making available one or more lists of transaction numbers and/or transaction number tuples and storing these lists temporarily or permanently in the acceptance point in an interrogatable manner when the acceptance point is being loaded. This makes it possible to achieve complete independence on the part of the acceptance point from the presence of a data link to the central point.

In a preferred embodiment, the method according to the invention is developed such that through the authentication a transaction is authorized and performed, in particular that a shipping or handing over of goods and/or a payment transaction is triggered and performed at the acceptance point, i.e. that through the performance of the authentication a payment transaction, for example, is carried out at an automatic cashier machine or similar.

Preferably, following an authorization message transmitted by the central point to the acceptance point, the user is given access to premises and/or an event, in particular a movie theater, swimming pool, concert or similar.

The method can also be used, once an authorization message has been transmitted by the central point to the acceptance point, for the purpose of allowing the user to utilize a service, in particular a consular, government or similar service.

Likewise, a possible development consists in, once an authorization message has been transmitted by the central point to the acceptance point, allowing the user access to analog or digital data, in particular media such as news, music, video or similar.

Preferably, the method is used to perform a verification and/or ensure compliance with legal provisions, in particular age restrictions and/or voluntary restrictions.

On the one hand, this enables verification of compliance with mandatory statutory provisions, such as a legal age limit, e.g. majority. It also enables verification of compliance with restrictions set by voluntary self-regulation bodies, such as age limits for movies and the like. Likewise, voluntary self-restrictions that users have imposed upon themselves, such as a block for gambling casinos, can also be verified.

Preferably, a numerical or an alphanumerical transaction number (TrxID) is used.

Preferably, the transaction number (TrxID) is used to establish a communication link between the acceptance point and the user terminal.

By using the transaction number (TrxID) to establish a communication link between the acceptance point and the user terminal it is possible to establish a specially coded link in a simple and secure manner.

According to the invention, the number of digits of the transaction number (TrxID) is adapted dynamically, in particular according to the number of parallel active transactions and/or according to the estimated traffic load.

Preferably the temporal re-use of the transaction number (TrxID) is selected according to the type of acceptance point.

Preferably, the geographical re-use of the transaction number (TrxID) is selected dynamically according to the country code and/or mobile telephone cells and/or location of the acceptance point.

Preferably, the user triggers the authentication process either by simply sending the transaction number (TrxID) to the central point or by additionally inputting a personal identifier, in a particular personal password, TAN, iTAN, biometric information, in particular a fingerprint or similar.

Preferably, the acceptance point communicates indirectly with the central point, in particular via one or more aggregators, in particular a district collection point, central computer in the supermarket or similar.

It is therefore not necessary for each single acceptance point to be connected directly or to be directly connectable to the central point since the possibility exists of grouping several acceptance points into units and communicating indirectly with the central point.

Preferably, the subscribers use a variety of communication media, in particular Ethernet, Internet, landlines, radio or mobile telephones and/or different services/protocols, in particular USSD, IP, SMS, GPRS.

In this respect, "subscriber" means any component involved in the authentication process, in particular user terminal, acceptance point, central point, database, etc. Regarding the user terminal, this may be in particular a mobile telephone terminal, but can also be a landline communication terminal such as a telephone or computer.

Alternatively or cumulatively, in the event of faulty, incomplete delivery of the article/provision of a service, non-access to premises or similar, the entire sum or a partial sum plus a possible amount for compensation can be reimbursed.

In the case of a payment transaction, various margins can be automatically deducted/added, such as a currency conversion charge, charge for covering the default risk, processing charges, so that the acceptance point receives a smaller amount and/or the user pays a higher amount.

In this respect, the amount of the currency can already be fixed at the beginning of the transaction or be negotiated between the parties during the transaction, permitting, if necessary, the specification of upper and/or lower limits by one or/and the other subscriber. A tip for service staff can also be included.

An amount can initially be reserved for a defined time and the complete amount or partial amounts be finally posted during this time period, with the remaining amount being automatically released at the end of the time period, unless this has not already been done by the acceptance point by means of a prior message.

It is possible for one or both parties to select the payment means from a subscriber-specific list (either during the transmission of/request for the transaction ID or in the course of a dialog).

The possible payment means can be adapted dynamically by the central point for one or both subscribers and limited as appropriate, for example as a function of payment history, creditworthiness, risk of misuse, turnover amount, number of transactions, etc.

During the authentication and processing of payment transactions, the subscribers (acceptance point and/or user) can use the same or different currencies.

It is also possible to conduct the communication with the subscriber (acceptance point and/or user) in different languages.

In a preferred embodiment, when authorizing the transaction the central point computes a key that is unique and permanently assigned to the user, in particular additionally to the acceptance point, and informs the acceptance point of this key so that previous transactions of the user can be clearly assigned to the user.

In this respect, the key is unique and permanent, at least regarding the user and possibly regarding the combination of user and acceptance point.

An exemplary implementation and application of this variant would be that the customer downloads a payable article from an Internet portal, e.g. Test.de.

Through the "permanent key" the customer is recognized and thus given access to previously purchased articles and can download these.

Furthermore, Test.de, for example, can recognize that the customer is mainly interested in "entertainment electronics" and present appropriate articles (the customer himself does not, however, have to be known).

In a further preferred embodiment, the value of the transaction is equal to 0, in particular the money amount of the transaction is equal to 0, and the user is thus given access to a user account free of charge.

This enables, for example, repeated access to previously purchased and paid articles via a computer network such as the Internet.

Several exemplary embodiments of the method according to the invention are illustrated in the figures and are explained below with reference to the figures, in which:
- Figure 1: shows a first embodiment of a method according to the invention for authentication of a user to an acceptance point;
- Figure 2: shows a second embodiment of a method according to the invention for authentication of a user to an acceptance point;
- Figure 3: shows a third embodiment of a method according to the invention for authentication of a user to an acceptance point;
- Figure 4: shows a fourth embodiment of a method according to the invention for authentication of a user to an acceptance point;
- Figure 5: shows a fifth embodiment of a method according to the invention for authentication of a user to an acceptance point.

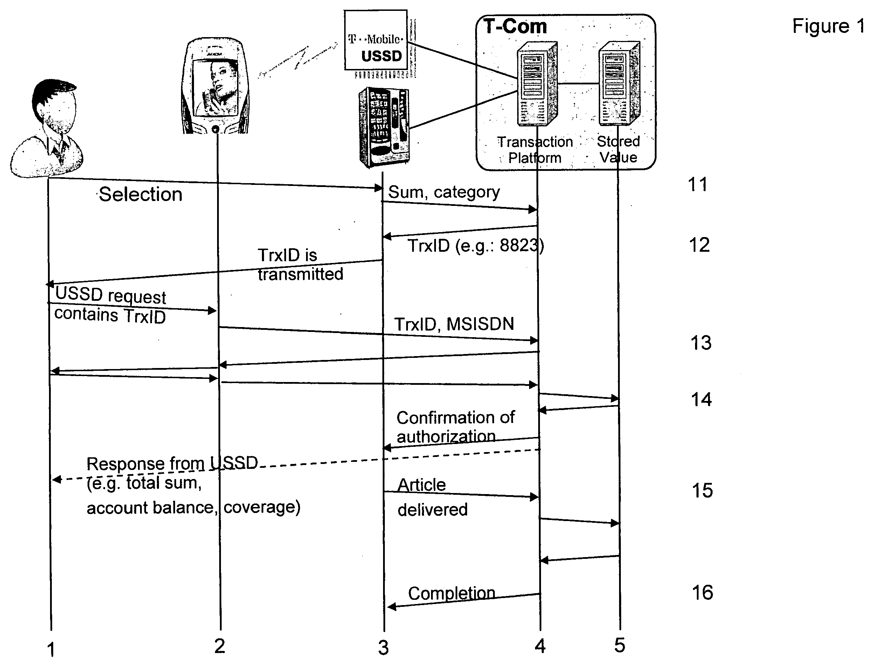

Figures 1 to 5 illustrate various embodiments and variants of the authentication method according to the invention, in each case as an example in the form of the authentication of a user 1 to an acceptance point in the form of a vending machine 3, with a transaction being authorized by means of the authentication method. In the illustrated examples, the same components are designated by the same reference symbols in each case.

The exemplary embodiment illustrated in Figure 1 relates to the authentication of a user 1 to an acceptance point in the form of a vending machine 3, the seller and the purchaser being brought together through a temporary transaction ID, i.e. a transaction number TrxID. This transaction ID TrxID is used for communication so that no permanent identifier, e.g. account number, etc., requires to be known, that is to say that the user 1 does not have to first register with the acceptance point 3.

For clearing purposes, for example, the transaction can be identified long-term by means of the time stamp of the transaction and the temporary transaction ID or by a unique long-term transaction ID. The long-term transaction ID, i.e. the transaction number, is issued during the transaction, a long-term transaction number being preferred for technical reasons.

The sequence of the method according to the invention is illustrated in Figure 1. In the form of the vending machine 3, an offer for the dispensing of articles is made available, the user 1 making a corresponding choice by selecting the appropriate item at the vending machine 3, i.e. at the acceptance point, e.g. by entering a code number to identify the article or similar. This causes the vending machine 3 to start the authentication process and the transaction.

Since the user 1, who possesses a mobile telephone terminal 2, which identifies him clearly via the subscriber identification number MSISDN, has not previously been registered at the vending machine 3, the vending machine 3 does not know the MSISDN of the mobile telephone terminal 2.

Having started the transaction, the vending machine 3 requests a temporary transaction number TrxID from the central point 4, indicating the sum and the goods category as it does so. In the example according to Figure 1, the transaction number TrxID "8823" is transmitted from the central point 4 to the acceptance point 3. The acceptance point 3 and the central point 4 are connected for this purpose by a data link for exchanging data, i.e. the acceptance point 3 and the central point 4 have a communication channel. This can, for example, be achieved through an Internet connection, a landline telephone connection or a mobile telephone connection. In the illustrated example, the link between the acceptance point 3 and the central point 4 is, by way of example, an Internet connection.

When a mobile telephone connection is used, different services, such as data link, SMS, USSD, etc. can be used.

The central point thus provides the temporary transaction ID "8823" and informs the acceptance point 3, i.e. the point of sale 3, of this, the acceptance point 3 in its turn transmitting this temporary transaction ID TrxID 8823 to the user 1. This transmission to the user 1 can be done verbally and/or by means of a display and/or via Internet or similar. Alternatively, the TrxID can be transmitted by radio (Bluetooth, NFC) or infrared signals.

The user 1 thus has the possibility, by using the mobile telephone terminal 2 and the transaction number TrxID "8823", to transmit the latter to the central point 4, for example by sending a short message SMS with an appropriate predefined text, such as "*999#8823", as in the illustrated example, to the central point. This short message from the mobile telephone terminal 2 to the central point 4 naturally also comprises the subscriber identification number MSISDN in addition to the transaction number TrxID 8823. This SMS is received by the central point 4 and further processed.

In the illustrated example, this is done by means of a USSD request using the mobile telephone terminal 2. Unstructured Supplementary Service Data (USSD) is a standardized transmission service for GSM networks which supports supplementary mobile telephone services implemented by means of GSM signaling. The access numbers for services of this kind that have to be dialed in order to utilize such services have the format *1NN#, the "*" and "#" requesting the appropriate service. Via USSD services it is possible, for example, to gain access to preconfigured services that are specific to the operator of the respective mobile telephone network.

The transaction number TrxID transmitted by the central point 4 to the acceptance point 3 depends on the total number of transaction numbers TrxID, which again depends on the number of parallel transactions. For example, the transaction number made available can comprise 4 digits as in the example described. The transaction number TrxID is valid for a limited time.

The length of the TrxID is computed dynamically depending on the parallel transactions/expected parallel transactions.

Using the provided transaction ID (e.g. 8823), the offering can now be requested from the central point 4, the offering being identified by the transaction ID.

The offer data, such as price, product designation and dealer are then displayed as a result of the central point 4 accessing the data stored in the database 5. The user 1 now has the possibility of accepting or rejecting the offer. If the customer 1 confirms the transaction, the sum is authorized and posted via the transaction platform. The central point 4 then confirms the authorization to the acceptance point 3, whereupon the goods are delivered and a corresponding message is sent by the acceptance point 3 to the central point 4. If required, a request to specify the desired payment means can be made to the supplier 3 or user 1 while performing the transaction. Once the article has been issued and the transaction performed, the sum is debited, as shown in Figure 1, and the process, i.e. the transaction, is completed.

Further variants of the method according to the invention and the performance thereof are possible, for example in the form that the transaction is triggered or started by the user 1.

It is also possible for the transaction to be started by the debtor 1, i.e. the customer, or the creditor 3, i.e. the supplier, without indicating a price or by indicating only a given upper price limit. When the communication link has been established, a price negotiation can take place. The payment transaction is only triggered and only takes place once a price has been agreed.

It is also possible to start the payment transaction by using the central point 4, but with the peers then communicating directly with each other, for example to download general terms and conditions and to deliver the goods, for example in the form of transmitting electronic files via the Internet.

It is possible to use different languages for debtor 1 and creditor 3 during the authentication and performance of the transaction, because the central point 4 and the database 5 are involved as intermediaries.

The re-use interval for transaction numbers, i.e. the transaction IDs, can be reduced by using additional information, such as country, mobile telephone cell, etc., which enables shorter transaction numbers to be used. The debtor 1 (customer) and creditor 3 (supplier) can establish their transaction via different communication networks or services, e.g. landline, LAN, W-LAN, GPRS, USSD (radio), voice channel (radio), etc.

In this respect, the characteristics of the dynamically generated transaction identification numbers are such that the number of acceptance points is larger than the number of simultaneous transactions. Since not every acceptance point has its own unique identifier but is assigned a temporary identifier, this can be shorter. Manual input at the terminal becomes simpler as a result. For example, there are more than 600,000 payment machines in the form of vending machines for beverages and cigarettes, but only a few hundred transactions are performed simultaneously in the Federal Republic of Germany.

The length of the transaction numbers depends on the level of traffic. Outside peak periods, for example at night, a very short transaction number can be used, consisting for example of only two digits, that is to say that the length of the transaction numbers can vary according to the level of traffic and, for example, the time of day.

Since the transaction number in the example explained above with reference to Figure 1 must be requested for each payment transaction, a link from the acceptance point to the transaction platform is required. A link must therefore be established ad hoc or there must be a permanent link.

The individual process steps of the sequence according to Figure 1 are:
- 11: Customer 1 selects the desired item at a vending machine 3. Vending machine 3 starts the payment transaction (MSISDN unknown).
- 12: Temporary transaction ID (TrxID) is transmitted. The length of the TrxID depends on the total number of transaction numbers TrxID, which depends on the number of parallel transactions (e.g. 4 digits). Transaction number TrxID is valid for a limited time and is displayed.
- 13: Customer 1 starts a USSD request, MSISDN and (TrxID are received by the central point 4.
- 14: Selection of transaction/offer based on the TrxID. Details are displayed. Customer 1 must confirm the transaction. Sum is authorized and posted (via the transaction platform).
- 15: Customer 1 is notified of the successful authorization and the sum is debited (response to USSD request). Vending machine 3 receives authorization information, article is delivered.
- 16: Transaction completed.

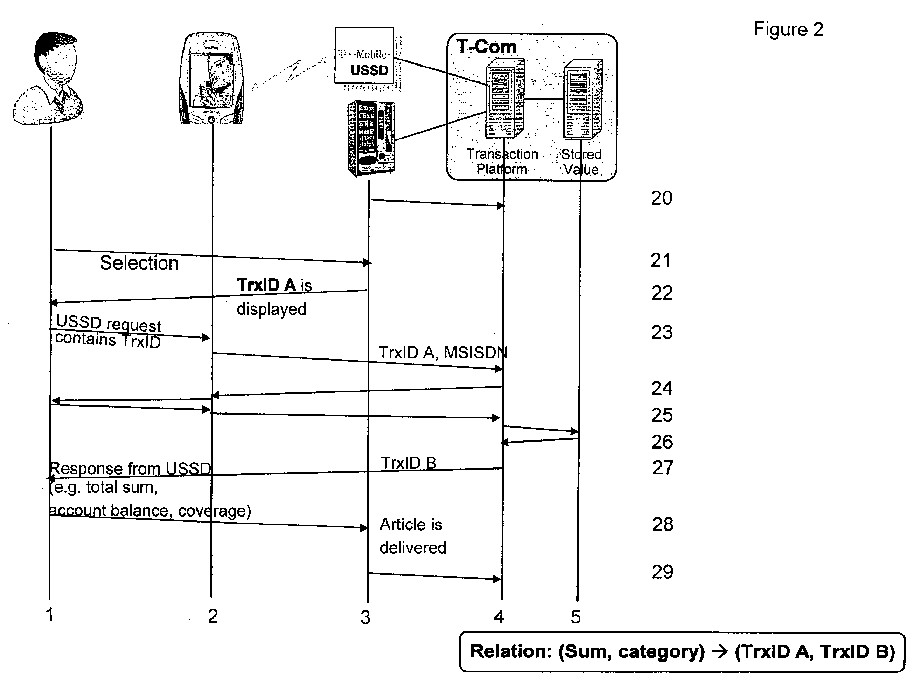

In the variant illustrated in Figure 2 for the performance of a payment transaction by means of stored transaction number tuples, a permanent online link or the establishment of an ad hoc link between the vending machine 3 and the transaction platform 4 is not required, that is to say that the machine 3 in the shown example has no possibility of establishing a permanent online link, for example because the appropriate technology is not available or no radio connection exists, if there is no mobile telephone coverage in the area of the acceptance point 3.

The transaction, i.e. the payment transaction illustrated in the example of Figure 2, is controlled by means of transaction number tuples consisting of two transaction IDs. These tuples are brought to the point of sale 3 beforehand, e.g. manually as part of the process for servicing and/or loading the vending machine 3 or by means of establishing a one-time link via a communication connection.

One of these IDs is made known by the creditor 3 (supplier) to the debtor 1 (customer) and the debtor 1 uses it to perform an authorization by using this first transaction number TrxID A of the transaction number tuple consisting of two transaction numbers A and B.

After successful authorization and execution of the payment transaction, the debtor 1 is notified of the second ID TrxID B which he notifies to the creditor 3. If this corresponds to the stored second TrxID B, the article can be delivered. A transaction number tuple consisting of the transaction IDs A and B clearly identifies the price and, possibly, the goods category, that is to say that the transaction and/or offer is selected on the basis of the transaction number TrxID. As illustrated in Figure 2, the details are displayed and the transaction is confirmed stating the first transaction number A, in particular the sum is debited with the involvement of the database 5 and the central point 4 through the intermediary of which the transaction is executed.

Following provision by the central point 4 of the second transaction number TrxID B , which is required to complete the transaction number tuple consisting of A and B, through transmission to the mobile telephone terminal 2 of the user 1, the delivery of the article can be triggered using the second transaction number TrxID B by passing it on to the vending machine 3, upon which a corresponding confirmation of the delivery of the article is sent by the vending machine 3 to the central point 4 as verification of the transaction performed. Alternatively, if the transaction fails, a notification is sent to the effect that a transaction has failed, followed by reimbursement of the posted sum.

The seller, i.e. the creditor 3, thus fetches one or more blocks of transaction number tuples in advance. He needs one block per price and goods category.

When making an offer, the creditor 3 informs the purchaser, i.e. the debtor 1, of a transaction ID A of a tuple that matches the goods category/price, for example by displaying it on the vending machine 3.

The debtor 1 performs an authorization of the transaction by indicating the notified transaction ID A. In doing so, he receives information on the offer, e.g. price, goods category, seller, etc.

If the debtor 1 accepts the offer, he receives a second transaction ID B from the central point 4, by means of which he can authenticate himself to the creditor 3, by informing the creditor 3 of the second transaction ID B, for example through automatic forwarding from the user terminal 2 to the vending machine 3.

The creditor 3 checks whether the notified second transaction ID B matches his first transaction ID A, i.e. whether this is a correct transaction number tuple consisting of A and B. If the answer is yes, the goods are delivered.

In one variant of the method according to the invention, the creditor 3 is clearly identified through the transaction ID, or alternatively, the debtor 1 must additionally enter a dealer identifier code in the application. The re-use interval for identification numbers can be reduced by using additional information, such as country, mobile telephone cell, etc., which enables shorter identification numbers and identification number tuples to be used.

In a further variant, the transaction, i.e. the authentication, is performed by means of a transaction number tuple, but unlike the preceding example, the transaction number tuples are not stored in lists, but are computed on a case-by-case basis upon request, i.e. upon triggering of an authentication process, by means of an algorithm.

Here, the purchaser (debtor) informs the central point of the transaction data such as dealer, acceptance point, goods category by using the appropriate application in his mobile telephone terminal. Based on the transaction data, both the acceptance point and the central point each compute a key. The central point sends the key it has computed to the debtor, i.e. to the customer, who forwards it to the creditor, e.g. by inputting it on the keypad of the mobile telephone terminal, or similar. If the two keys match, the goods can be delivered. To compute the key, not only the transaction data are used but also, in particular, secret data, such as a personal code which has to be entered, or also variable data, such as the time at which the transaction was triggered.

An exemplary sequence of an authorization and transaction process of this kind could be as follows: The debtor 1 selects an article and enters the transaction data with details on the dealer, the acceptance point and the goods category in the appropriate transaction application of his mobile telephone terminal 2. This transaction application or payment application transmits the data to the central point 4 which computes the key TrxlD and transmits this back to the payment application of the mobile telephone terminal 2. Using the key received from the central point 4, the customer 1 can authenticate himself to the acceptance point 3 by means of his mobile telephone terminal 2. The acceptance point 3 in its turn computes the key TrxID to check the key, i.e. the transaction number.

If the keys match, i.e. the key sent by the central point 4 is identical with the key computed by the acceptance point 3, the article is delivered.

The individual process steps of the sequence according to Figure 2 are:
- 20: Request for transaction numbers TrxIDs for each combination (price and category). TrxID A and TrxID B are received.
- 21: Customer 1 selects the desired article at a vending machine 3 or similar.
- 22: Vending machine 3 selects unused TrxID A to match the selected article. TrxID A is displayed.
- 23: Customer 1 starts USSD request with TrxID A (TrxID A must be unique, i.e. very long or, alternatively, an additional identifier to identify the vending machine 3 must be used).
- 24: Selection of transaction/offer based on TrxID A.
- 25: Details are displayed. Transaction is confirmed.
- 26: Sum is debited.
- 27: USSD response contains TrxID B. TrxID B can be shorter than TrxID A, just sufficiently long to ensure that TrxID B cannot be guessed.
- 28: TrxID B is transmitted to vending machine 3. If TrxID B matches TrxID A, the article is issued. If necessary, renewed input of the ID, 10 seconds waiting time in the event of wrong input of ID.
- 29: Request for new transaction numbers (TrxID A, TrxID B), notification of failed transactions → reimbursement, information about successful transactions (for verification).

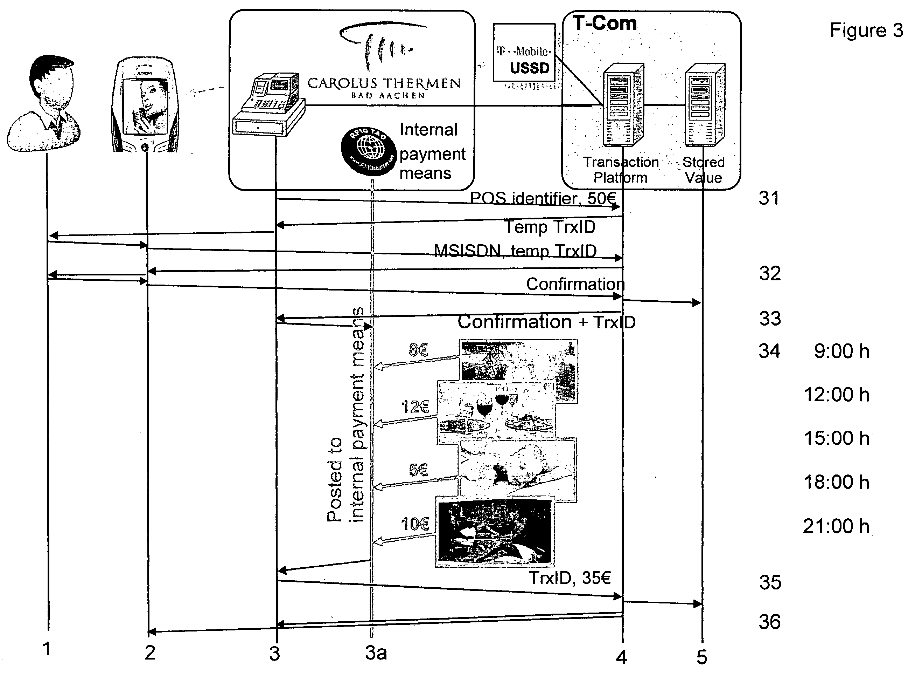

Shown in Figure 3 is a further example in which by means of one single authentication a log-in occurs, and already upon logging in a sum is reserved for the payment of individual partial sums. In the shown example, this is EUR 50. If the customer now utilizes various services of the acceptance point 3, individual partial sums are posted via an internal payment means from a prepaid account on an RFID chip 3a (Radio Frequency Identification) to the acceptance point 3. When checking out, the sum used, which is EUR 35 in the shown example, is posted as the final amount. Following this, both the mobile telephone terminal 2 which was used for authentication to the acceptance point 3 and the central point 4 and the database 5 connected thereto are informed about the postings so that a payment transaction can be performed to complete the process.

Especially advantageous in the illustrated method for authentication and in particular for the execution and triggering of payment transactions is that the customer does not have to reveal his identity to the seller. In this instance, the seller can be a vending machine, an automatic cashier machine, a taxi, any point of sale, an Internet shop or similar.

A further advantage is the high security of the authentication process, since customer data cannot be misused, such as would be possible, for example, with a credit card number or in the event of manipulation of the EC card terminal at an acceptance point such as a supermarket or similar. Authorization is performed online in an especially advantageous manner and with a very high level of security.

Security is further increased by using different communication media. That is to say, Trojans, "man in the middle" attacks are avoided with a high level of probability, since both communication media would have to be infected.

Duplicates cannot occur in this respect since the transaction ID is unique within a time period and is only temporarily valid.

Various payment means can be selected by the debtor and, possibly, by the creditor. It is not necessary in this respect for the other party to know about the chosen payment means. For example, a distinction can be made between a private prepaid account and a company prepaid account. That is to say, the payment means used can, in particular, also be stored-value (prepaid) or debit card or credit card. It is also possible to handle payment by direct debiting, the customer having only to first register with the central point in this case, but, as before, not with the acceptance point, thus ensuring the anonymity of the customer with respect to the acceptance point.

The authentication and the transaction are authorized centrally to reduce the possibility of misuse through theft (PIN input, biometric information) or uncollectible receivables, i.e. the transaction is not authorized by the machine or by an employee at the point of sale but via the central system. It is possible to provide for a restriction with respect to the payment means, i.e. a personal limit or similar. At the same time, compliance with conditions of sale, such as an age limit, is possible by verifying customer data and/or by inputting a personal PIN/biometric information or similar.

In addition to the actual payment transaction, questions regarding tipping or similar can be put during the customer dialog. Such a tip, if confirmed, leads to a, possibly limited, second payment transaction, e.g. a transaction which is posted separately, for instance to the "service staff account." In another variant, only one single transaction payment is executed, i.e. the sum to be paid is increased by the amount of the tip, as is known from credit card transactions.

Depending on the business process, the purchaser (customer) can, however, reveal his identity, if for example, he consents to the transmission of his subscriber identification number MSISDN by the central point to the acceptance point when using a mobile telephone terminal for the authorization. In this respect, identity may be his "real identity" or a fictitious identity.

It is possible to reduce the transaction sum if a maximum sum has been fixed by the creditor at the beginning of the transaction. Post-authorization, i.e. increasing the payment sum, can then only be performed through further confirmation by the debtor, i.e. the customer. In such a case, a second transaction must be triggered through a second authorization. It is possible for unused sums, or sums that have not been charged as final, to be reimbursed, such as shown in the third example in Figure 3, in which a total amount of EUR 50 was authorized at the beginning, of which only a partial sum of EUR 35 has been used.

By means of the unique transaction number, i.e. a temporary transaction ID plus time stamp or a long-term transaction ID assigned during the transaction, the transaction can be reproduced. The long-term transaction number is notified to both parties, e.g. in transaction overviews or a monthly account statement or similar. This information can also be used for further verifications, such as clearing.

The individual process steps of the sequence according to Figure 3 are:
- 31: Cashier machine starts "reservation", the sum to be reserved being specified and a temporary transaction ID generated.
- 32: The TrxID is displayed to the customer. He, in turn, starts a transaction by stating the ID and receives further details (how much, who, etc.). The customer confirms the transaction and the sum is reserved.
- 33: Notification of successful reservation and assignment of a long-term TrxID. Internal payment means is charged.
- 34: Customer "consumes." The time is stated.
- 35: When "checking out", the sum used is charged as final.
- 36: Customer and cashier machine are informed about the successful posting.

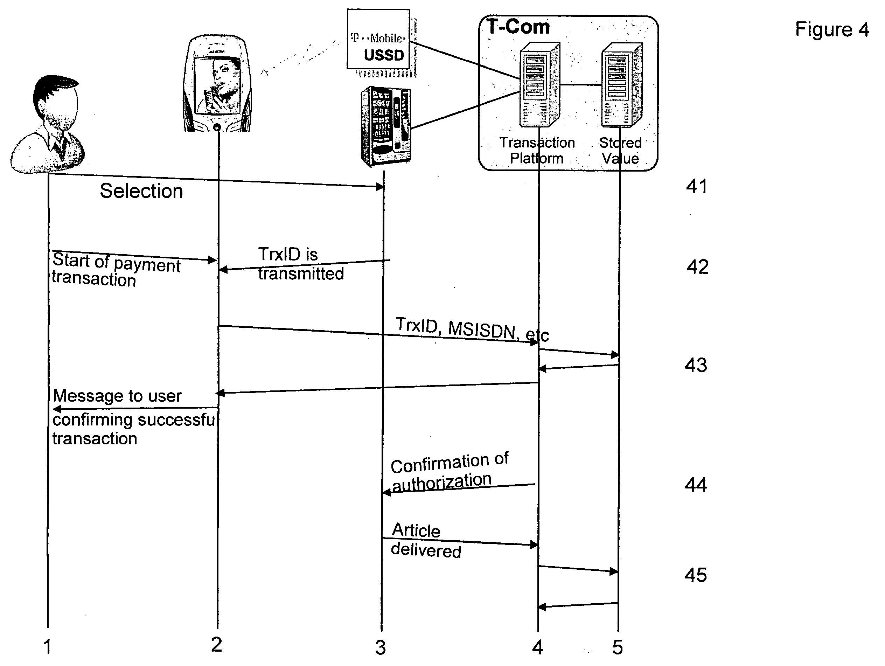

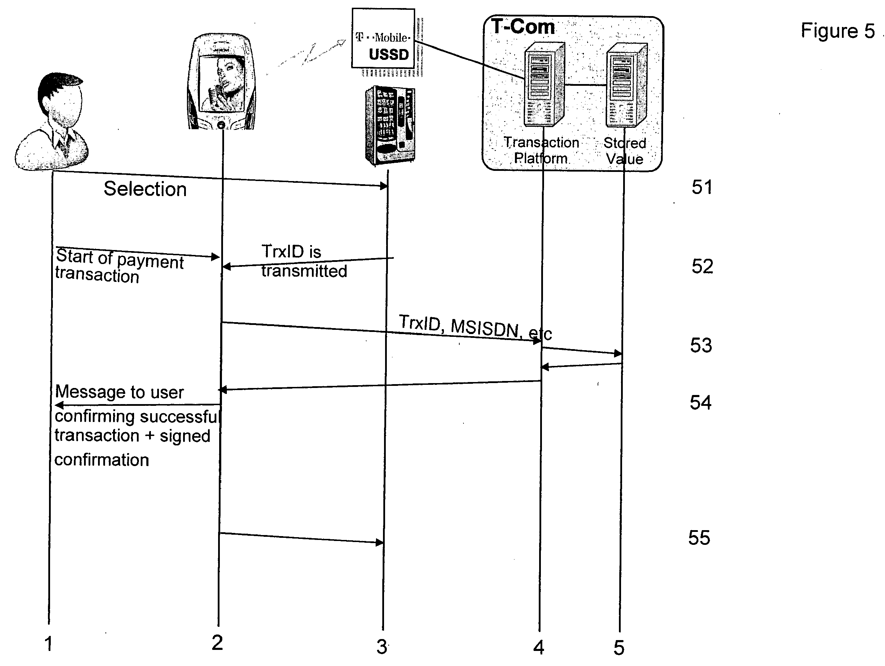

Illustrated in Figures 4 and 5 are two further embodiments of the authentication method according to the invention, by means of which a customer 1 can authenticate himself to a vending machine 3 and can authorize and perform a payment transaction via the intermediary of the central point 4.

The authentication process is triggered by the customer 1 using a mobile telephone terminal 2 by using data transmitted by the vending machine 3 to the terminal 2. These data include the transaction number TrxlD provided by the vending machine 3. The data is transmitted from the vending machine 3, i.e. from the acceptance point 3, to the terminal 2 via short-range communication. The message to start the transaction is sent to the central point 4, i.e. to the transaction platform. The data transmitted by the mobile telephone terminal 2 to the transaction platform, i.e. the central point 4 comprise, on the one hand, the transaction number TrxID provided by the vending machine 3 as well as, additionally, the MSISDN serving to identify the user 1. The transaction number TrxID and the MSISDN identifying the user 1 are transmitted by the terminal 2 to the central point 4 via the mobile telephone network.

The transaction data are then processed as appropriate by the central point 4 and the connected database 5. The account of the customer 1 is debited accordingly and, once the central point 4 has received a corresponding confirmation from the processing unit and the database 5 it generates a confirmation message which is transmitted, again via the mobile telephone network, to the terminal 2 of the user 1 for display and further processing.

At the same time, a confirmation message is generated by the central point 4 and transmitted to the acceptance point 3, whereupon the acceptance point 3, i.e. the vending machine 3, delivers the article. The vending machine 3 sends a confirmation back to the central point 4 stating that the goods have been delivered. This notification by the acceptance point 3 to the central point 4 concerning the successful completion of the transaction is forwarded by the central point 4 to the connected data processing unit 5, which reconfirms it to the central point 4.

The individual process steps of the sequence according to Figure 4 are:
- 41: Customer 1 selects the desired article at a vending machine 3. Vending machine 3 starts transaction.
- 42: Customer starts payment transaction (authentication) using the data transmitted by the machine to the terminal (e.g. by means of NFC, RFID). The message to start the transaction is sent to the central point, i.e. transaction platform.
- 43: The customer's account is debited and the customer receives an optional confirmation message regarding the successful transaction.
- 44: The machine receives a confirmation of the transaction which it can clearly relate to the original transaction since, for example, a key was used which was computed based on the original transaction ID.
- 45: Depending on the business process, i.e. if delivery of the article can fail, the machine sends a message to the central point stating that the article was successfully delivered.

The process illustrated in Figure 5 differs from that in Figure 4 in that, after receiving the transaction number TrxID and MSISDN by means of a message from the terminal 2 to identify the intended transaction on the one hand and the user 1 on the other hand, the central point 4 generates a confirmation message which is also signed by the central point 4 by means of a confirmation with signature. This signed confirmation is transmitted by the central point 4 directly to the terminal 2, whereupon the terminal 2 can use this transaction confirmation signed by the central point 4 to authenticate itself to the acceptance point 3 via a short-range communication link, so that the acceptance point 3, in this case the vending machine 3, can deliver the article.

The individual process steps of the sequence according to Figure 5 are:
- 51: Customer 1 selects the desired article at a vending machine 3. Vending machine 3 starts the transaction.
- 52: Customer starts payment transaction using the data transmitted by the machine to the terminal 2 (e.g. by means of NFC, RFID). The message to start the transaction is sent to the central point 4, i.e. the transaction platform.
- 53: The customer's account is debited and the customer receives an optional confirmation message regarding the successful transaction.
- 54: Furthermore, a confirmation of the successful transaction signed by the central point 4 (transaction platform) is sent to the terminal 2 of the user. The user or the terminal 2 of the user transmits the information by NFC or RFID to the acceptance point 3 (signed: e.g. private/public key method, "secret" algorithm.
- 55: The confirmation of the transaction is sent to the machine 3 (acceptance point), which delivers the article.

In the examples shown in Figures 4 and 5, the communication between the user terminal 2 and the central point 4 thus takes place via the mobile telephone network. The communication between user terminal 2 and acceptance point 3, on the other hand, takes place by short-range communication such as NFC or RFID.

In the examples illustrated in Figures 4 and 5, the transaction number TrxID is provided by the acceptance point 3 after the authentication process has been started, the authentication to the central point 4 being performed by generation of a corresponding message by the terminal 2. This message from the terminal 2 contains not only the transaction number TrxlD but also the subscriber identification number MSISDN, by means of which the user 1 can be identified.

## Claims

1. A method for authentication of a user (1) to an acceptance point (3), the authentication being performed by comparing a transaction number (TrxID) with a computed or stored transaction number (TrxID), wherein the acceptance point (3) and/or a user terminal (2) sends a request message to a central point (4) and the central point (4) provides and transmits a temporarily valid transaction number (TrxID) by means of which authentication of the user (1) to the acceptance point (3) can be performed, or wherein
the acceptance point (3) provides a temporarily valid transaction number (TrxID) by means of which authentication of the user (1) to the central point (4) can be performed, an authorization after successful authentication to the central point (4) being performed by the generation and transmission of an authorization message from the central point (4) to the acceptance point (3) **characterized in that** the number of digits of the transaction number (TrxID) is adapted dynamically according to the number of parallel active transactions and/or according to an estimated traffic load.

2. A method according to claim 1, **characterized in that** the request for provision and/or transmission of the transaction number (TrxID) is sent by the acceptance point (3) to the central point (4) and/or by a user terminal (2) to the acceptance point (3) and/or to the central point (4), in particular by a mobile telephone terminal (2) having an appropriate authentication application.

3. A method according to claim 1 or 2, **characterized in that** the authentication process is triggered by a user through a personal code, in particular a password, a single-use transaction number (TrxID) or biometric identification, in particular a fingerprint or similar.

4. A method according to any of the preceding claims, **characterized in that** the indication of a personal code for triggering the authentication process is required in every case or that the request is made depending on the current situation, in particular depending on the total turnover of the user (1) within a time interval, the magnitude of the sum involved, the history of the customer, the type of article and/or other customer-specific characteristics.

5. A method according to any of the preceding claims, **characterized in that** the communication between the user terminal (2), acceptance point (3) and central point (4) takes place via mobile telephone connections and/or telephone connections or temporary or permanent communication connections, in particular via the Internet, and/or via short-range communication.

6. A method according to any of the preceding claims, **characterized in that** the transaction number (TrxID) is requested by means of a mobile telephone terminal (2) in a first short message and/or by USSD, and that the transaction number (TrxID) is transmitted by the central point (4) in a second short message and/or by USSD to the mobile telephone terminal (2).

7. A method according to any of the preceding claims, **characterized in that** the transaction number (TrxID) is transmitted by the central point (4) via a mobile telephone connection to a mobile telephone terminal (2) or via a telephone connection to a landline telephone.

8. A method according to any of the preceding claims, **characterized in that** the transaction number (TrxID) is computed by means of an algorithm, whereby in particular a code word and/or a subscriber identification number of a mobile telephone subscriber (1), in particular MSISDN, IMSI or TIMSI, forms the basis for the computation and/or a code transmitted by short-range communication forms the basis for the computation.

9. A method according to any of the preceding claims, **characterized in that** the transaction number (TrxID) is computed by means of an algorithm, both by the acceptance point (3) and by the central point (4) using fixed parameters, in particular that the parameters used are the date and/or the time of the request and/or parameters of a payment transaction, in particular an order number and/or article number and/or article price, and/or a code of the acceptance point (3) and/or the number of active transactions.

10. A method according to any of the preceding claims, **characterized in that** for authentication a transaction number tuple (TrxID A, TrxID B) consisting of at least two transaction numbers (TrxID A, TrxID B) is used, a first transaction number (TrxID A) being provided by the acceptance point (3) and a second transaction number (TrxID B) being provided by the central point (4) based on the first transaction number (TrxID A).

11. A method according to any of the preceding claims, **characterized in that** t the acceptance point (3) has a list of unused transaction numbers (TrxID) and/or transaction number tuples (TrxID A, TrxID B) stored temporarily or permanently in an interrogatable manner.

12. A method according to any of the preceding claims, **characterized in that** by means of the authentication a transaction is authorized and performed, in particular that a shipping of articles and/or delivery of articles at the acceptance point (3) and/or payment transaction is triggered and performed.

13. A method according to any of the preceding claims, **characterized in that** following an authorization message transmitted by the central point (4) to the acceptance point (3), the user (1) is given access to premises and/or an event, in particular a movie theater, swimming pool, concert or similar.

14. A method according to any of the preceding claims, **characterized in that** following an authorization message transmitted by the central point (4) to the acceptance point (3), the user (1) is permitted to utilize a service, in particular a consular, government or similar service.

15. A method according to any of the preceding claims, **characterized in that** following an authorization message transmitted by the central point (4) to the acceptance point (3), the user (1) is given access to analog or digital data, in particular media such as news, music, video or similar.

16. A method according to any of the preceding claims, **characterized in that** the method is used to perform a verification and/or ensure compliance with legal provisions, in particular age restrictions and/or voluntary restrictions.

17. A method according to any of the preceding claims, **characterized in that** a numerical or alphanumerical transaction number (TrxID) is used.

18. A method according to any of the preceding claims, **characterized in that** by using the transaction number (TrxID) a communication link is established between the acceptance point (3) and the user terminal (2).

19. A method according to any of the preceding claims, **characterized in that** the temporal re-use of the transaction number (TrxID) is selected according to the type of acceptance point.

20. A method according to any of the preceding claims, **characterized in that** the geographical re-use of the transaction number (TrxID) is selected dynamically according to the country code and/or mobile telephone cells and/or location of the acceptance point.

21. A method according to any of the preceding claims, **characterized in that** the user (1) triggers the authentication process either by simply sending the transaction number (TrxID) to the central point (4) or by additionally inputting a personal identifier, in a particular personal password, TAN, iTAN, biometric information, in particular a fingerprint or similar.

22. A method according to any of the preceding claims, **characterized in that** t the acceptance point (3) communicates indirectly with the central point (4), in particular via one or more aggregators, in particular a district collection point, central computer in the supermarket or similar.

23. A method according to any of the preceding claims, **characterized in that** the subscribers (2, 3, 4, 5) use a variety of communication media, in particular Ethernet, Internet, landlines, radio or mobile telephones and/or different services/protocols, in particular USSD, IP, SMS, GPRS.

24. A method according to any of the preceding claims, **characterized in that** when authorizing the transaction the central point (4) computes a key that is unique and permanently assigned to the user, in particular additionally to the acceptance point, and informs the acceptance point of this key so that previous transactions of the user can be clearly assigned to the user.

25. A method according to any of the preceding claims, **characterized in that** the value of the transaction, in particular the money amount of the transaction, is equal to 0 and the user is thus given access to a user account free of charge.

## Patentansprüche

1. Verfahren zur Authentifizierung eines Benutzers (1) an einer Akzeptanzstelle (3), wobei die Authentifizierung durch Vergleichen einer Transaktionsnummer (TrxID) mit einer berechneten oder gespeicherten Transaktionsnummer (TrxID) durchgeführt wird, wobei die Akzeptanzstelle (3) und/oder ein Benutzerendgerät (2) eine Anforderungsnachricht an eine zentrale Stelle (4) sendet und die zentrale Stelle (4) eine vorübergehend gültige Transaktionsnummer (TrxID) bereitstellt und überträgt, mittels derer Authentifizierung des Benutzers (1) an der Akzeptanzstelle (3) durchgeführt werden kann, oder wobei die Akzeptanzstelle (3) eine vorübergehend gültige Transaktionsnummer (TrxID) bereitstellt, mittels derer Authentifizierung des Benutzers (1) an der zentralen Stelle (4) durchgeführt werden kann, wobei eine Authentifizierung nach erfolgreicher Authentifizierung an der zentralen Stelle (4) durch die Erzeugung und Übertragung der Autorisierungsnachricht von der zentralen Stelle (4) an die Akzeptanzstelle (3) durchgeführt wird, **dadurch gekennzeichnet, dass** die Anzahl der Stellen der Transaktionsnummer (TrxID) gemäß der Anzahl paralleler aktiver Transaktionen und/oder gemäß einer geschätzten Verkehrslast dynamisch angepasst wird.

2. Verfahren nach Anspruch 1, **dadurch gekennzeichnet, dass** die Anforderung der Bereitstellung und/oder Übertragung der Transaktionsnummer (TrxID) von der Akzeptanzstelle (3) an die zentrale Stelle (4) und/oder von einem Benutzerendgerät (2) an die Akzeptanzstelle (3) und/oder an die zentrale Stelle (4), insbesondere von einem Mobiltelefon-Endgerät (2) mit einer geeigneten Authentifizierungsanwendung, gesandt wird.

3. Verfahren nach Anspruch 1 oder 2, **dadurch gekennzeichnet, dass** der Authentifizierungsprozess von einem Benutzer durch einen persönlichen Code, insbesondere ein Kennwort, eine Transaktionsnummer (TrxID) für einmalige Verwendung oder biometrische Identifikation, insbesondere ein Fingerabdruck, oder ähnliches ausgelöst wird.

4. Verfahren nach einem der vorstehenden Ansprüche, **dadurch gekennzeichnet, dass** die Angabe eines persönlichen Codes zum Auslösen des Authentifizierungsprozesses in jedem Fall erforderlich ist oder dass die Anforderung in Abhängigkeit von der gegenwärtigen Situation erfolgt, insbesondere in Abhängigkeit vom gesamten Umsatz des Benutzers (1) innerhalb eines Zeitintervalls, der Größe der involvierten Summe, der Historie des Benutzers, dem Typ des Artikels und/oder anderen kundenspezifischen Charakteristika.

5. Verfahren nach einem der vorstehenden Ansprüche, **dadurch gekennzeichnet, dass** die Kommunikation zwischen dem Benutzerendgerät (2), der Akzeptanzstelle (3) und der zentralen Stelle (4) über Mobiltelefonverbindungen und/oder Telefonverbindungen oder vorübergehende oder dauerhafte Kommunikationsverbindungen, insbesondere über das Internet, und/oder über Kurzbereichskommunikation erfolgt.

6. Verfahren nach einem der vorstehenden Ansprüche, **dadurch gekennzeichnet, dass** die Transaktionsnummer (TrxID) mittels eines Mobiltelefon-Endgeräts (2) in einer ersten Kurznachricht und/oder durch USSD angefordert wird und dass die Transaktionsnummer (TrxID) von der zentralen Stelle (4) in einer zweiten Kurznachricht und/oder durch USSD an das Mobiltelefon-Endgerät (2) übertragen wird.

7. Verfahren nach einem der vorstehenden Ansprüche, **dadurch gekennzeichnet, dass** die Transaktionsnummer (TrxID) von der zentralen Stelle (4) über eine Mobiltelefonverbindung an ein Mobiltelefon-Endgerät (2) oder über eine Telefonverbindung an ein Festnetztelefon übertragen wird.

8. Verfahren nach einem der vorstehenden Ansprüche, **dadurch gekennzeichnet, dass** die Transaktionsnummer (TrxID) mittels eines Algorithmus berechnet wird, wobei insbesondere ein Codewort und/oder eine Teilnehmeridentifikationsnummer eines Mobiltelefonteilnehmers (1), insbesondere MSISDN, IMSI oder TIMSI, die Grundlage für die Berechnung bildet und/oder ein Code, übertragen durch Kurzbereichskommunikation, die Grundlage für die Berechnung bildet.

9. Verfahren nach einem der vorstehenden Ansprüche, **dadurch gekennzeichnet, dass** die Transaktionsnummer (TrxID) sowohl von der Akzeptanzstelle (3) als auch von der zentralen Stelle (4) mittels eines Algorithmus unter Verwendung fester Parameter berechnet wird, insbesondere dass die verwendeten Parameter das Datum und/oder die Zeit der Anforderung und/oder Parameter einer Zahlungstransaktion, insbesondere eine Bestellnummer und/oder eine Artikelnummer und/oder ein Artikelpreis, und/oder ein Code der Akzeptanzstelle (3) und/oder die Anzahl aktiver Transaktionen sind.

10. Verfahren nach einem der vorstehenden Ansprüche, **dadurch gekennzeichnet, dass** zur Authentifizierung ein Transaktionsnummer-Tupel (TrxID A, TrxID B), bestehend aus mindestens zwei Transaktionsnummern (TrxID A, TrxID B), verwendet wird, wobei eine erste Transaktionsnummer (TrxID A) von der Akzeptanzstelle (3) bereitgestellt wird und eine zweite Transaktionsnummer (TrxID B) von der zentralen Stelle (4) basierend auf der ersten Transaktionsnummer (TrxID A) bereitgestellt wird.

11. Verfahren nach einem der vorstehenden Ansprüche, **dadurch gekennzeichnet, dass** die Akzeptanzstelle (3) über eine Liste nicht verwendeter Transaktionsnummern (TrxID) und/oder Transaktionsnummer-Tupels (TrxID A, TrxID B) verfügt, die vorübergehend oder dauerhaft in einer abfragbaren Weise gespeichert ist.

12. Verfahren nach einem der vorstehenden Ansprüche, **dadurch gekennzeichnet, dass** eine Transaktion mittels der Authentifizierung autorisiert und durchgeführt wird, insbesondere dass eine Versendung von Artikeln und/oder Zustellung von Artikeln an der Akzeptanzstelle (3) und/oder eine Zahlungstransaktion ausgelöst und durchgeführt wird.

13. Verfahren nach einem der vorstehenden Ansprüche, **dadurch gekennzeichnet, dass** folgend darauf, dass eine Autorisierungsnachricht von der zentralen Stelle (4) an die Akzeptanzstelle (3) übertragen wurde, dem Benutzer (1) Zugang zu Räumlichkeiten und/oder einem Ereignis, insbesondere ein Filmtheater, ein Schwimmbecken, ein Konzert oder ähnliches, gewährt wird.

14. Verfahren nach einem der vorstehenden Ansprüche, **dadurch gekennzeichnet, dass** folgend darauf, dass eine Autorisierungsnachricht von der zentralen Stelle (4) an die Akzeptanzstelle (3) übertragen wurde, dem Benutzer (1) gestattet wird, einen Dienst, insbesondere ein Konsulats-, Behörden- oder ähnlicher Dienst, zu nutzen.

15. Verfahren nach einem der vorstehenden Ansprüche, **dadurch gekennzeichnet, dass** folgend darauf, dass eine Autorisierungsnachricht von der zentralen Stelle (4) an die Akzeptanzstelle (3) übertragen wurde, dem Benutzer (1) Zugang zu analogen oder digitalen Daten, insbesondere Medien wie Nachrichten, Musik, Video oder ähnliches, gewährt wird.

16. Verfahren nach einem der vorstehenden Ansprüche, **dadurch gekennzeichnet, dass** das Verfahren verwendet wird, eine Verifizierung durchzuführen und/oder Einhaltung gesetzlicher Vorschriften zu gewährleisten, insbesondere Alterseinschränkungen und/oder freiwillige Einschränkungen.

17. Verfahren nach einem der vorstehenden Ansprüche, **dadurch gekennzeichnet, dass** eine numerische oder alphanumerische Transaktionsnummer (TrxID) verwendet wird.

18. Verfahren nach einem der vorstehenden Ansprüche, **dadurch gekennzeichnet, dass** durch Verwendung der Transaktionsnummer (TrxID) eine Kommunikationsverbindung zwischen der Akzeptanzstelle (3) und dem Benutzerendgerät (2) hergestellt wird.

19. Verfahren nach einem der vorstehenden Ansprüche, **dadurch gekennzeichnet, dass** die vorübergehende Wiederverwendung der Transaktionsnummer (TrxID) gemäß dem Typ der Akzeptanzstelle ausgewählt wird.

20. Verfahren nach einem der vorstehenden Ansprüche, **dadurch gekennzeichnet, dass** die geografische Wiederverwendung der Transaktionsnummer (TrxID) gemäß dem Landescode und/oder Mobiltelefonzellen und/oder dem Standort der Akzeptanzstelle dynamisch ausgewählt wird.

21. Verfahren nach einem der vorstehenden Ansprüche, **dadurch gekennzeichnet, dass** der Benutzer (1) den Authentifizierungsprozess entweder durch einfaches Senden der Transaktionsnummer (TrxID) an die zentrale Stelle (4) oder durch zusätzliches Eingeben einer persönlichen Kennung, insbesondere ein persönliches Kennwort, TAN, iTAN, biometrischer Informationen, insbesondere ein Fingerabdruck, oder ähnliches auslöst.

22. Verfahren nach einem der vorstehenden Ansprüche, **dadurch gekennzeichnet, dass** die Akzeptanzstelle (3) mit der zentralen Stelle (4) indirekt kommuniziert, insbesondere über einen oder mehrere Aggregatoren, insbesondere eine Distriktsammelstelle, ein Zentralcomputer im Supermarkt oder ähnlich.

23. Verfahren nach einem der vorstehenden Ansprüche, **dadurch gekennzeichnet, dass** die Teilnehmer (2, 3, 4, 5) eine Vielfalt von Kommunikationsmedien, insbesondere Ethernet, Internet, Festnetz, Funk- oder Mobiltelefone, und/oder verschiedene Dienste/Protokolle, insbesondere USSD, IP, SMS, GPRS, verwenden.

24. Verfahren nach einem der vorstehenden Ansprüche, **dadurch gekennzeichnet, dass** die zentrale Stelle (4) bei der Autorisierung einen Schlüssel berechnet, der eindeutig ist und dem Benutzer dauerhaft zugeordnet wird, insbesondere zusätzlich zur Akzeptanzstelle, und die Akzeptanzstelle über diesen Schlüssel informiert, so dass vorherige Transaktionen des Benutzers dem Benutzer klar zugeordnet werden können.

25. Verfahren nach einem der vorstehenden Ansprüche, **dadurch gekennzeichnet, dass** der Wert der Transaktion, insbesondere der Geldbetrag der Transaktion, gleich 0 ist und dem Benutzer demgemäß kostenfreier Zugang zu einem Benutzerkonto gewährt wird.

## Revendications

1. Procédé d'authentification d'un utilisateur (1) auprès d'un point d'acceptation (3), l_{'}authentification s'effectuant par comparaison d'un numéro de transaction (TrxID) à un numéro de transaction calculé ou mémorisé (TrxID), dans lequel le point d'acceptation (3) et/ou un terminal d'utilisateur (2) envoient/envoie un message de demande à un point central (4) et le point central (4) fournit et transmet un numéro de transaction à validité temporaire (TrxID) au moyen duquel l'authentification de l'utilisateur (1) auprès du point d'acceptation (3) peut s'effectuer, ou dans lequel le point d'acceptation (3) fournit un numéro de transaction à validité temporaire (TrxID) au moyen duquel l'authentification de l'utilisateur (1) auprès du point central (4) peut s'effectuer, une autorisation à la suite d'une autorisation réussie auprès du point central (4) s'effectuant par génération et transmission d'un message d'autorisation du point central (4) au point d'acceptation (3), le procédé étant **caractérisé en ce que** le nombre de chiffres du numéro de transaction (TrxID) est adapté dynamiquement en fonction du nombre de transactions parallèles actives et/ou en fonction d'un volume de trafic estimé.

2. Procédé selon la revendication 1, **caractérisé en ce que** la demande de fourniture et/ou de transmission du numéro de transaction (TrxID) est envoyée par le point d'acceptation (3) au point central (4) et/ou par un terminal d'utilisateur (2) au point d'acceptation (3) et/ou au point central (4), plus particulièrement par un terminal téléphonique mobile (2) doté d'une application d'authentification appropriée.

3. Procédé selon la revendication 1 ou 2, **caractérisé en ce que** le processus d'authentification est déclenché par un utilisateur par le biais d'un code personnel, plus particulièrement d'un mot de passe, d'un numéro de transaction à usage unique (TrxID) ou d'une identification biométrique, plus particulièrement d'une empreinte digitale ou similaire.

4. Procédé selon l'une quelconque des revendications précédentes, **caractérisé en ce que** l'indication d'un code personnel permettant le déclenchement du processus d'authentification est exigée à chaque fois, ou **en ce que** la demande est effectuée selon la situation du moment, plus particulièrement selon le montant total des transactions par l'utilisateur (1) dans un laps de temps, l'importance de la somme mise en jeu, l'historique du client, le type d'article et/ou d'autres caractéristiques propres au client.

5. Procédé selon l'une quelconque des revendications précédentes, **caractérisé en ce que** la communication entre le terminal d'utilisateur (2), le point d'acceptation (3) et le point central (4) s'effectue par le biais de liaisons téléphoniques mobiles et/ou de liaisons téléphoniques ou de liaisons de communication temporaires ou permanentes, plus particulièrement par le biais d'Internet et/ou par le biais d'une communication à courte distance.

6. Procédé selon l'une quelconque des revendications précédentes, **caractérisé en ce que** le numéro de transaction (TrxID) est demandé au moyen d'un terminal téléphonique mobile (2) dans un premier message court et/ou par USSD, et **en ce que** le numéro de transaction (TrxID) est transmis par le point central (4) dans un deuxième message court et/ou par USSD au terminal téléphonique mobile (2).

7. Procédé selon l'une quelconque des revendications précédentes, **caractérisé en ce que** le numéro de transaction (TrxID) est transmis par le point central (4) par le biais d'une liaison téléphonique mobile à un terminal téléphonique mobile (2) ou par le biais d'une liaison téléphonique à un téléphone de ligne terrestre.

8. Procédé selon l'une quelconque des revendications précédentes, **caractérisé en ce que** le numéro de transaction (TrxID) est calculé au moyen d'un algorithme, moyennant quoi, plus particulièrement, un mot de code et/ou un numéro d'identification d'abonné d'un abonné à la téléphonie mobile (1), plus particulièrement MSISDN, IMSI ou TIMSI, sert/servent de base au calcul et/ou un code transmis par communication à courte distance sert de base au calcul.

9. Procédé selon l'une quelconque des revendications précédentes, **caractérisé en ce que** le numéro de transaction (TrxID) est calculé au moyen d'un algorithme, à la fois par le point d'acceptation (3) et par le point central (4) à l'aide de paramètres fixés, plus particulièrement **en ce que** les paramètres utilisés sont la date et/ou l'heure de la demande et/ou des paramètres d'une transaction de paiement, plus particulièrement un numéro de commande et/ou un numéro d'article et/ou un prix d'article, et/ou un code du point d'acceptation (3) et/ou le nombre de transactions actives.

10. Procédé selon l'une quelconque des revendications précédentes, **caractérisé en ce que** l'authentification d'une transaction fait appel à un multiplet de numéros de transaction (TrxID A, TrxID B) constitué d'au moins deux numéros de transaction (TrxID A, TrxID B), un premier numéro de transaction (TrxID A) étant fourni par le point d'acceptation (3) et un deuxième numéro de transaction (TrxID B) étant fourni par le point central (4) sur la base du premier numéro de transaction (TrxID A).

11. Procédé selon l'une quelconque des revendications précédentes, **caractérisé en ce que** le point d'acceptation (3) dispose d'une liste de numéros de transaction inutilisés (TrxID) et/ou de multiplets de numéros de transaction (TrxID A, TrxID B) mémorisés de façon temporaire ou permanente d'une manière interrogeable.

12. Procédé selon l'une quelconque des revendications précédentes, **caractérisé en ce qu'**une transaction est autorisée et effectuée au moyen de l'authentification, plus particulièrement **en ce qu'**une expédition d'articles et/ou une livraison d'articles au point d'acceptation (3) et/ou une transaction de paiement sont/est déclenchées/déclenchée et effectuées/effectuée.

13. Procédé selon l'une quelconque des revendications précédentes, **caractérisé en ce que**, suite à une message d'autorisation transmis par le point central (4) au point d'acceptation (3), l'utilisateur (1) se voit accorder l'accès à un local et/ou un événement, plus particulièrement à un cinéma, une piscine, un concert ou similaire.

14. Procédé selon l'une quelconque des revendications précédentes, **caractérisé en ce que**, suite à une message d'autorisation transmis par le point central (4) au point d'acceptation (3), l'utilisateur (1) se voit accorder la permission de profiter d'un service, plus particulièrement d'un service consulaire, gouvernemental ou similaire.

15. Procédé selon l'une quelconque des revendications précédentes, **caractérisé en ce que**, suite à une message d'autorisation transmis par le point central (4) au point d'acceptation (3), l'utilisateur (1) se voit accorder l'accès à des données analogiques ou numériques, plus particulièrement à des médias tels que des nouvelles, de la musique, de la vidéo ou similaire.

16. Procédé selon l'une quelconque des revendications précédentes, **caractérisé en ce qu'**il sert à effectuer une vérification et/ou garantir le respect de dispositions légales, plus particulièrement de limites d'âge et/ou de restrictions volontaires.

17. Procédé selon l'une quelconque des revendications précédentes, **caractérisé en ce qu'**un numéro de transaction numérique ou alphanumérique (TrxID) est utilisé.

18. Procédé selon l'une quelconque des revendications précédentes, **caractérisé en ce que** l'utilisation du numéro de transaction (TrxID) permet d'établir une liaison de communication entre le point d'acception (3) et le terminal d'utilisateur (2).

19. Procédé selon l'une quelconque des revendications précédentes, **caractérisé en ce que** la réutilisation temporelle du numéro de transaction (TrxID) est choisie en fonction du type du point d'acceptation.

20. Procédé selon l'une quelconque des revendications précédentes, **caractérisé en ce que** la réutilisation géographique du numéro de transaction (TrxID) est choisie dynamiquement en fonction du code de pays et/ou des cellules de téléphonie mobile et/ou de l'emplacement du point d'acceptation.

21. Procédé selon l'une quelconque des revendications précédentes, **caractérisé en ce que** l'utilisateur (1) déclenche le processus d'authentification soit en envoyant simplement le numéro de transaction (TrxID) au point central (4), soit en saisissant en outre un identificateur personnel, plus particulièrement un mot de passe personnel, un TAN, un iTAN, des informations biométriques, plus particulièrement une empreinte digitale ou similaire.

22. Procédé selon l'une quelconque des revendications précédentes, **caractérisé en ce que** le point d'acceptation (3) communique indirectement avec le point central (4), plus particulièrement par le biais d'un ou de plusieurs agrégateurs, plus particulièrement d'un point de collecte de proximité, d'un ordinateur central dans le supermarché ou similaire.

23. Procédé selon l'une quelconque des revendications précédentes, **caractérisé en ce que** les abonnés (2, 3, 4, 5) utilisent un éventail de supports de communication, plus particulièrement Ethernet, Internet, des lignes terrestres, des radiotéléphones ou des téléphones mobiles et/ou différents services/protocoles, plus particulièrement USSD, IP, SMS, GPRS.

24. Procédé selon l'une quelconque des revendications précédentes, **caractérisé en ce qu'**au moment de l'autorisation de la transaction, le point central (4) calcule une clé unique pour l'utilisateur qui lui est attribuée de façon permanente, plus particulièrement également pour le point d'acceptation, et informe le point d'acceptation de cette clé pour permettre l'attribution sans équivoque à l'utilisateur de transactions antérieures de l'utilisateur.

25. Procédé selon l'une quelconque des revendications précédentes, **caractérisé en ce que** la valeur de la transaction, plus particulièrement le montant de la transaction, est égale à 0 et l'utilisateur se voit ainsi accorder gratuitement l'accès à un compte d'utilisateur.
